# EUROPEAN PATENT APPLICATION

(11) **EP 1 265 404 A2**
(43) Date of publication of application: **11.12.2002**
(21) Application number: 02000885.0
(22) Date of filing: 15.01.2002
(51) Int. Cl.: H04L 12/433

(54) **Electronic device adaptable for fibre channel arbitrated loop and method for detecting wrong condition in FC-AL**

(30) Priority: 05.06.2001 JP 2001168944
(71) Applicant: Hitachi, Ltd., Chiyoda-ku, Tokyo 101-8010 (JP)
(72) Inventor: Iwata, Hisatoshi, c/o Hitachi, Ltd., Int.Prop.Grp., Chiyoda-ku, Tokyo 100-8220 (JP); Takayasu, Atsushi, c/o Hitachi,Ltd., Int.Prop.Grp., Chiyoda-ku, Tokyo 100-8220 (JP)
(74) Representative: Strehl Schübel-Hopf & Partner

(57) **Abstract**

The present invention enables the efficient detection and the specification of the location of the wrong condition for wrong conditions in the loop with a low probability of error occurrence and that do not amount to out of step synchronisation, in FC-AL systems.

An FC-AL adaptable device (41-1, 41-2, ....., 41-n) coupled to the loop of an FC-AL system comprises a transmitter (2) having a function for determining whether an output transaction is being carried out in its own port, and transmitting a diagnostic frame when an output transaction is not being carried out, and transmitting with priority an output transaction signal when an output transaction is being carried out; and a receiver (1) having a function for detecting wrong conditions in the loop by performing constantly CRC checking of received frames, and cancelling after the performance of the CRC checking when the received frame is a diagnostic frame. Each adaptable device connected to the loop thereby constantly carries out CRC checking of received frames and monitors the occurrence of wrong conditions in the loop. Because an adaptable device that itself detected a wrong condition makes notification of wrong condition occurrence, it becomes possible to detect and specify the locations of wrong conditions quickly, even for wrong conditions in the loop with a low probability of error occurrence.

## Description

### INTRODUCTION

The present invention relates to technology for detecting wrong conditions in a fibre channel arbitrated loop (FC-AL), and more particularly to technology for detecting wrong conditions, for efficiently detecting wrong conditions with a low probability of occurring in electronic devices disposed in a loop, and specifying the location of the wrong conditions.

### DESCRIPTION OF PRIOR ART

In systems using fibre channel arbitrated loops, all the electronic devices connected to the loop are affected when a wrong condition in the loop occurs due to a failure of the cable constituting the loop or of the electronic devices. As a result, it is important from an operations standpoint to detect the wrong condition in the loop quickly, specify the location of the wrong condition, and restore the loop.

In such a system, with a wrong condition such as where the loop is disconnected at a given location, the electronic devices themselves, connected to the loop, can possibly detect the deviation of the synchronisation of received signals (out of step), or the like, and the system can detect the wrong condition in the loop on the basis thereof. Because it is possible to determine that a wrong condition in the loop has occurred between a device which detected out of step synchronisation and the device connected just before that device, detecting a wrong condition and specifying the location of the wrong condition are relatively easy.

Moreover, disclosed in Japanese Patent Laid-open Publication No. 2000-49804 is a technology for detecting channel wrong conditions between fibre channel switches.

In the case of the occurrence of a wrong condition that does not amount to a disconnection of the loop and such that out of step synchronisation is not detected using electronic devices in the loop, direct wrong condition detection by the electronic devices themselves cannot be expected. For this reason, it is necessary to carry out an operation for estimating the occurrence of wrong conditions in the loop in FC-AL from the content of errors occurring in input/output transactions of the system and the frequency of occurrence, and specifying the locations of the wrong conditions.

In order to specify the location of the wrong condition, the method generally employed in FC-AL systems is to establish bypass circuits for each of the electronic devices in the loop. If the bypass circuits are established in advance and the electronic devices are connected to the loop, the system can monitor the occurrence of wrong conditions in the loop while narrowing down the location of wrong conditions by separating each electronic device from the loop by sequentially selecting the bypass circuits.

In the case of the occurrence of wrong conditions in the loop where the probability of errors occurring is low and that do not amount to out of step synchronisation in FC-AL systems, it is complicated and difficult to detect the wrong condition and specify the location of the wrong condition. Errors occurring in normal input/output transactions have a low probability of occurrence, and therefore the location of the wrong condition cannot be specified. Also, the method for narrowing down the location of the wrong condition using bypass circuits as discussed above does not detect wrong conditions efficiently and requires time to find the problem in the case of errors with a low probability of occurrence.

Particularly in the case of a large number, over 100, of magnetic disk devices such as large scale magnetic disk array devices connected to an FC-AL loop, a large amount of time will be needed to recover from a wrong condition and the load and responsibility for the host devices (host) and maintenance staff carrying out the wrong condition recovery transaction is also high.

Furthermore, bypass circuits can remove wrong conditions in the loop by separating their electronic devices in the case where a failure occurs within an electronic device in the loop, but are not effective for the disconnection of the cable itself, malfunctions, or other failures occurring outside the electronic devices, and cannot specify the location of the wrong condition.

It is an object of the present invention to improve the efficiency of the operation for wrong condition analysis and wrong condition recovery by making it easy to detect wrong conditions and specify locations of the wrong conditions, in the case of the occurrence of wrong conditions in the loop with a low probability of error occurrence and that do not amount to out of step synchronisation in FC-AL systems.

### STATEMENT OF INVENTION

A magnetic disk device or other electronic device, adaptable for FC-AL and connected with or coupled to an FC-AL system loop, comprises a transmitter having a function for determining whether an output transaction is being performed at its own port, continuously transmitting diagnostic frames when output transactions are not being performed, and transmitting output transaction signals with priority when output transactions are being performed.

Also, an FC-AL adaptable electronic device comprises a receiver having a function for detecting wrong conditions in the loop by constantly performing CRC checking without distinguishing whether the received frame is a normal frame or a diagnostic frame, and a function for cancellation after performing CRC checking when the received frame is a diagnostic frame. Each of the FC-AL adaptable electronic devices connected with or coupled to the loop constantly carry out CRC checking of successively received frames and monitor for the occurrence of wrong conditions in the loop. An electronic device which itself detected a wrong condition reports the occurrence of the wrong condition, whereby fast detection and specification of the location of the wrong condition become possible even for wrong conditions in the loop with a low probability of error occurrence.

Moreover, CRC checking refers to error detection with cyclic codes (cyclic redundancy checks) and is shown as an example of a mode of operation. CRC checking includes checking with error detection and correction methods using CRC checking, as well as other error detection codes or error correction codes.

A frame is a unit of a signal transmitted in the data link layer and is a synonym for packet. For example, on Ethernet, these are related by this frame including an IP packet.

Also, the technology in Japanese Patent Laid-open Publication No. H08-8948 resembles the present invention with regards to each of the electronic devices on the loop carrying out communication data diagnosis. In Publication No. H08-8948, however, the diagnostic data is appended to the communication data in order to make notification of the diagnostic results in the relay station. The present invention is different in that a diagnostic frame separate from the communication data is transmitted and the diagnosis is carried out without altering the communication data in any way.

### BRIEF DESCRIPTION OF DRAWINGS

Figure 1 is a block diagram showing an embodiment of a port of the FC-AL adaptable device relating to the present invention;
Figure 2 is a timing chart showing an example of an operation of the transmitter controller 8;
Figure 3 is a timing chart showing an example of an operation of the frame CRC monitor 5; and
Figure 4 is an example of the constitution of an FC-AL system.

### DESCRIPTION OF SPECIFIC EMBODIMENTS

The preferred embodiments of the present invention are explained below using the attached drawings.

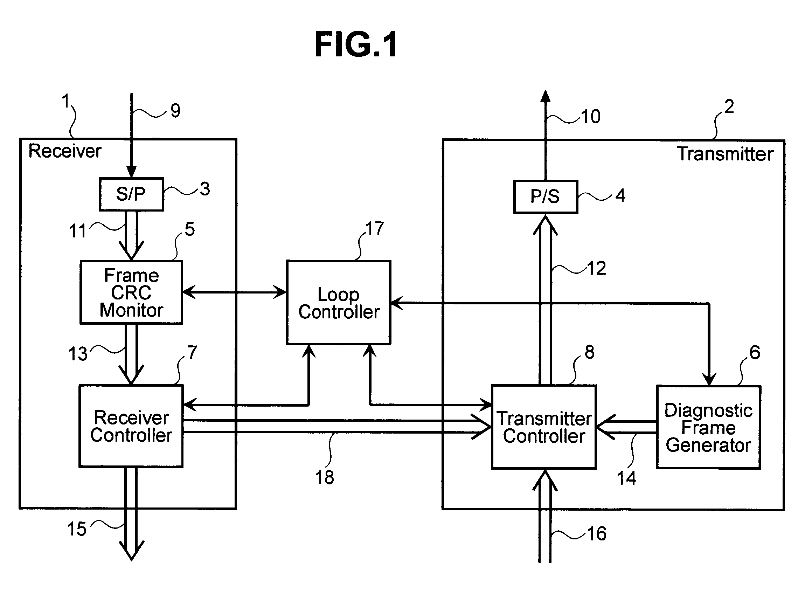

Figure 1 is a block diagram showing an example of a port provided to an FC-AL adaptable electronic device relating to the present invention. The port shown in Figure 1 comprises a receiver 1, a transmitter 2, and a loop controller 17.

The transmitter 2 comprises a diagnostic frame generator 6, a transmitter controller 8, and a serial signal transmitter 4.

The diagnostic frame generator 6 has a function for generating diagnostic frames and outputting the diagnostic frame 14. A diagnostic frame may be a frame that can be recognised as such, or may be distinguishable from a normal frame, with the receiver 1.

Also, in an FC-AL system wherein conventional electronic devices to which the present invention is not applied and electronic devices is applied are mixed together, the diagnostic frame may be a frame that becomes NOP (no operation) in a conventional electronic device, for example, so that the diagnostic frame 14 does not have a negative influence on the operation of the conventional electronic devices. Accordingly, a plurality of diagnostic frames are defined in advance, according to the set and type of frame handled, in the diagnostic frame generator 6 and can be selected appropriately and used as the diagnostic frames.

The transmitter controller 8 has a function for selecting any of the internal transmitted signal 16, transferred signal 18, or diagnostic frame 14 according to a control signal from the loop controller 17, and outputting the selected signal as the transmitted signal 12. It is also possible to be set so as not to select the diagnostic frame 14 and in this case, the diagnostic frame 14 is not output. The setting for not outputting the diagnostic frame 14 may be made in the transmitter controller 8 by other means as well.

This setting for outputting (effective) or not outputting (ineffective) the diagnostic frame 14 may also be set manually by maintenance staff for FC-AL adaptable electronic devices having this port, or electronically by sending a prescribed setting control signal through the fibre channel to the electronic devices. For the manual setting, the setting to output the diagnostic frame 14 is made by turning ON a switch established in the electronic devices. In this way, it becomes possible to detect with good efficiency randomly occurring wrong conditions by disposing electronic devices, set in this way, among the electronic devices connected with or coupled to the fibre channel, at every 10 devices, for example.

Also, in order to conserve the effort of making the manual setting, it is possible to make effective a function for generating a command to each of the electronic devices through the fibre channel and outputting this diagnostic frame 14, but in this case, it is necessary for the maintenance staff or operator to know the ID numbers or the like of the electronic devices. The former manual setting is more practical for FC-AL systems wherein electronic devices having the functions relating to the present invention and electronic devices not having are mixed and present together.

The serial signal transmitter 4 has a function for converting the transmitted signal 12 to a transmitted serial signal 10 and outputting this signal to the loop.

The receiver 1 is constituted with a serial signal receiver 3, a frame CRC monitor 5, and a receiver controller 7.

The serial signal receiver 3 has a function for converting the received serial signal 9 input from the loop to a received signal 11 to be transacted within the port.

The frame CRC monitor 5 has a function for inputting the received signal 11, and detecting the occurrence of wrong conditions in the loop by performing CRC checking of the received frames. The frame CRC monitor 5 can carry out the received frame checking using an error detection method or an error correction method other than CRC checking. This type of checking function can be made effective or ineffective with a setting.

The frame CRC monitor 5 has a function for carrying out frame CRC checking and so forth of the input received signal 11 and, when the result thereof is an error, making a display showing that there is an error (display to the effect that there is an error), or transmitting a signal showing that there is an error (error signal) to outside the electronic device.

The display to the effect that there is an error can be made by a light emitting element such as an LED disposed in an easy to see location on the electronic device lighting up and the maintenance staff learning intuitively and through their senses of an infrequently occurring error. This is because a CRC monitor 5 for about 100 electronic devices can carry out CRC checking of frames received successively and learn of the phenomenon of any number of LEDs thereon lighting with a very low frequency. It thereby becomes possible to specify the location of the wrong condition quickly. It is also possible to add an alarm sound instead of or along with the lighting of the LEDs. A sound emitting element to generate the alarm sound is established on the exterior of the electronic device.

The error signal may also be transmitted on the fibre channel in the transferred signal 18 or separately therefrom. Also, the error signal may be sent within the electronic device along with or separately from the internal received signal 15, and when conditions which can be preset are satisfied, the second error signal may also be transmitted on the fibre channel. So that it is possible to receive this error signal, a display to the effect that an error has occurred may be made on a display screen of a maintenance terminal device established on the fibre channel.

The frame CRC monitor 5 must also have a function for recognising that the received signal 11 is a diagnostic frame when reducing the responsibility for the signal transaction after cancellation in the case where the received signal 11 is a diagnostic frame. When this is not the case, the monitor only needs a normal function for processing the signal 11 as the frame CRC monitor output 13 even if the signal 11 is a diagnostic frame. A function for recognising that this signal 11 is a diagnostic frame and for cancellation preferably can be made effective or ineffective as appropriate with a setting.

The receiver controller 7 has a function for directing the input frame CRC monitor output 13 as output to the internal received signal 15 or transferred signal 18, with a control signal from the loop controller 17.

The loop controller 17 has a function for managing the state of the port, and a function for controlling the frame flow by controlling the receiver 1 and transmitter 2 according to the state of the port. The function for controlling the state of the port of the loop controller 17 also includes a function for determining whether an output transaction is being carried out in the port. Following are the two output transactions in the port. One is a transaction for transmitting a frame or protocol signal, such as data or status information, according to a request from the electronic device associated with the port. This is generated in the case where the electronic device associated with the port becomes subject to input/output transactions of the system. The other is a transaction for receiving a frame or protocol signal with this port from an upstream port and transmitting this on the loop without additional processing when this must be transferred to a downstream port. This occurs when the port is in a monitoring state.

In the case of transmitting a frame such as data upon a request from the electronic device itself associated with this port, the loop controller 17 issues a control signal to the receiver controller 8 and gives a command to select the internal transmitted signal 16. In the case of transferring a frame or protocol signal received by this port from an upstream port to a downstream port, the loop controller 17 issues a control signal to the receiver controller 7 and gives a command to direct the frame CRC monitoring output 13 to the transferred signal 18, while issuing a control signal to the transmitter controller 8 and giving a command to select the transferred signal 18. When the loop controller 17 determines that an output transaction is not being carried out in the port, the controller 17 issues a control signal to the transmitter controller 8 and gives a command to select the diagnostic frame 14. At this time, however, when the setting is not to output the diagnostic frame 14, the transmitter controller 8 does not select the diagnostic frame 14. Also, when the frame having this port as an address is received, the loop controller 17 issues a control signal to the receiver controller 7, and gives a command to direct the frame CRC monitor output signal 13 to the internal received signal 15.

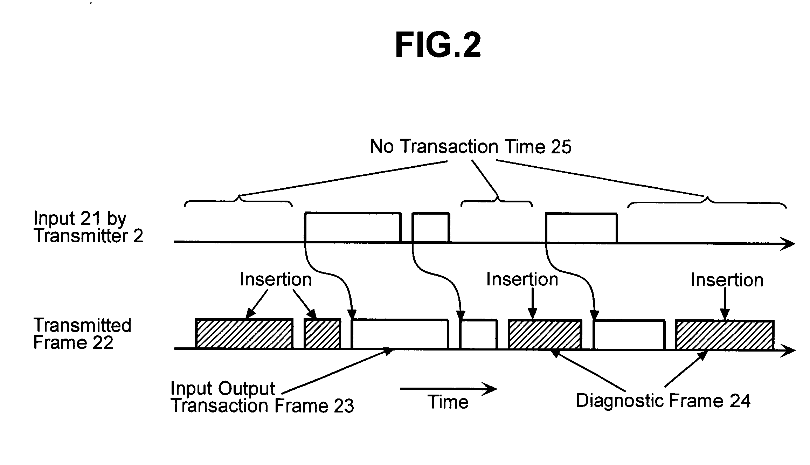

Figure 2 is a timing chart showing an example of an operation of the transmitter controller 8.

The input 21 by the transmitter 2 corresponds to a frame of either the internal transmitted signal 16 or transferred signal 18 selected by the transmitter controller 8 according to the command from the loop controller 17. The transmitted frame 22 corresponds to the frame of the transmitted signal 12 in Figure 1.

The loop controller 17 detects the no transaction time 25 in the input 21 by the transmitter 2 and notifies the transmitter controller 8. The insertion of the diagnostic frame 24 among the input/output transaction frames 23 in the transmitted frames 22 is thereby shown. With the functions of the transmitter controller 8, it becomes possible to transmit frames in the loop constantly even when an output transaction is not being carried out in the port.

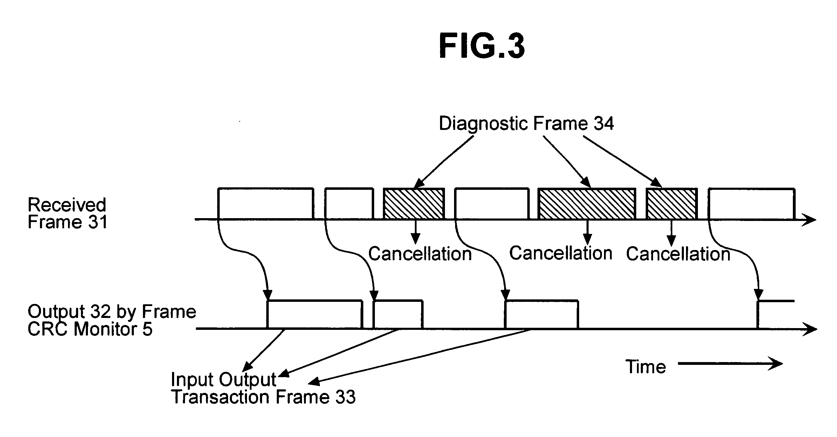

Figure 3 is a timing chart showing an example of an operation of the frame CRC monitor 5.

The received frame 31 corresponds to the frame of the received signal 11 in Figure 1. The output 32 by the frame CRC monitor 5 corresponds to the frame of the frame CRC monitor output 13 in Figure 1.

The frame CRC monitor 5 performs CRC checking for the input/output transaction frames 33, or the received frames 31 following the diagnostic frames 34, and then cancels the diagnostic frames 34. As a result, only the input/output transaction frames 33 are output as the output 32 by the frame CRC monitor 5.

With the functions of this frame CRC monitor 5, the CRC checking of the received frames is executed constantly and the situation of CRC errors occurring is monitored, whereby the occurrence of wrong conditions in the loop can be detected. Also, the probability that a wrong condition in the loop can be detected becomes high because the received frames are successive.

The port in Figure 1 is unlike a conventional FC-AL port in that it comprises a diagnostic frame generator 6 and frame CRC monitor 5 for wrong condition diagnosis and that the loop controller 17 has the function of controlling these two components. These diagnostic functions for wrong conditions in the loop result in an even greater signal delay in the port than results from the conventional art. When this is not preferable, the diagnostic function can be made ineffective when the diagnosis of wrong conditions in the loop is not necessary.

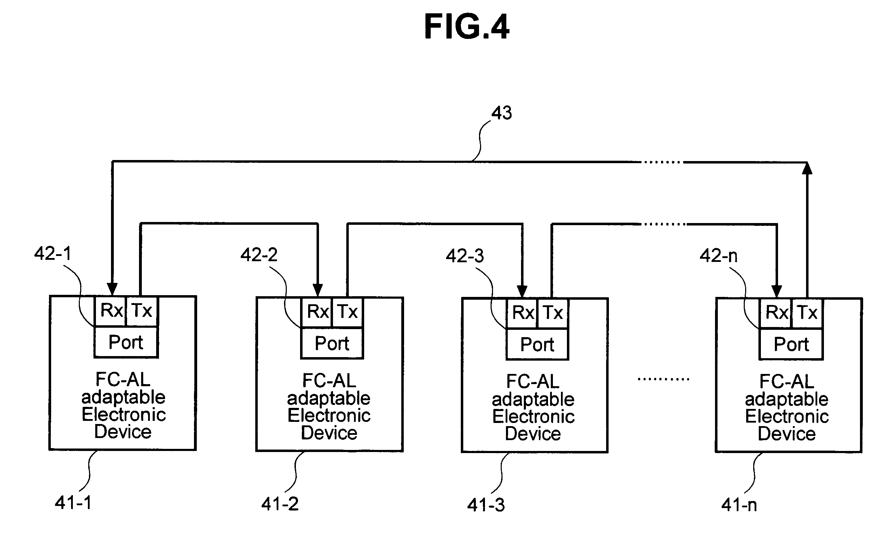

Next, a method for detecting the occurrence of a wrong condition in the loop and specifying the location of the wrong condition, for an FC-AL system constituted with FC-AL adaptable devices provided the port in Figure 1, is explained using Figure 4. This drawing shows an example of an FC-AL system constituted by connecting or coupling two or more FC-AL adaptable devices 41-j (1 ≤ j ≤ n: j is a nonnegative integer) with one FC-AL loop 43.

Each FC-AL adaptable device 41-j comprises a port 42-j corresponding to Figure 1 for connecting with or coupling to the FC-AL loop 43. With the functions of the transmitter controller 8 in Figure 1 comprising each port 42-j, the input/output transaction frames or diagnostic frames flow continuously in the FC-AL loop 43. Also, with the functions of the CRC monitor 5 in Figure 1 comprising each port 42-j, each FC-AL adaptable device 41-j constantly carries out CRC checking of the continuously received frames and monitors the situation of CRC error occurrence, and thereby constantly monitors the occurrence of wrong conditions in the loop. An FC-AL adaptable device 41-j that has itself detected a wrong condition in the loop makes notification to outside the system and requests wrong condition recovery.

Detection of the occurrence of wrong conditions in the loop with high probability is made possible by the continuous flow of frames in the FC-AL loop 43 in this way and the CRC checking of received frames by each FC-AL adaptable device 41-j (1 ≤ j ≤ n: j is a nonnegative integer).

Furthermore, when an FC-AL adaptable device 41-j detects the occurrence of a wrong condition in the loop and the upstream FC-AL adaptable device 41-(j-1) adjacent thereto does not detect a wrong condition in the loop, it can be specified that the wrong condition occurred between these two FC-AL adaptable devices 41-j and 41-(j-1).

For example, when the FC-AL adaptable device 41-2 detects the occurrence of a wrong condition in the loop and the FC-AL adaptable device 41-1 did not detect the wrong condition in the loop in Figure 4, it is understood that the wrong condition occurred between the FC-AL adaptable device 41-1 and the FC-AL adaptable device 41-2.

In another method, each FC-AL adaptable device 41-j internally accumulates statistical information for detected errors, making it possible to narrow down the location of the wrong condition of the loop to the FC-AL adaptable device showing the greatest frequency of error occurrence.

The present invention has the effect of making it possible to carry out wrong condition detection or the specification of the location of the wrong condition quickly, even in the event of the occurrence of a wrong condition in the loop with a low probability of error occurrence and that is not serious enough to amount to out of step synchronisation, in FC-AL systems to which a plurality, particularly a large number, of electronic devices is connected.

Wrong condition detection capacity becomes high because opportunities for diagnosis occur at the reception of all communication data and at the reception of diagnostic frames transmitted by each electronic device during free time.

It is possible to provide a generally applicable detection method because it is not necessary to manipulate information transferred on the loop, and the constitution is such that each electronic device makes notification to outside the system regarding the presence of a wrong condition.

For this reason, the work for the maintenance staff can be reduced without putting a load on the,host devices carrying out the wrong condition recovery operations and the efficiency of wrong condition analysis and restoring operations can be improved.

Having described a preferred embodiment of the invention with reference to the accompanying drawings, it is to be understood that the invention is not limited to the embodiments and that various changes and modifications could be effected therein by one skilled in the art without departing from the spirit or scope of the invention as defined in the appended claims.

## Claims

1. An electronic device (41-1, 41-2, ..., 41-n) adaptable for a fibre channel arbitrated loop, the electronic device can be coupled intermediately with a port (42-1, 42-2, ..., 42-n) to the fibre channel arbitrated loop, wherein said port comprises:
a loop controller (17) having a function for determining whether an output transaction is being carried out in the port;
a transmitter (2) having a function for transmitting diagnostic frames when said output transaction is not being conducted, and for transmitting an output transaction signal with priority over diagnostic frames when said output transaction is being conducted; and
a receiver (1) having a function for constantly carrying out error detection for received frames.

2. The electronic device adaptable for fibre channel arbitrated loop, according to Claim 1, wherein
said receiver further has a function for cancelling said received diagnostic frame after error detection.

3. The electronic device adaptable for fibre channel arbitrated loop, according to Claim 1, the electronic device having a function for enabling a plurality of frames to be set as said diagnostic frames.

4. The electronic device adaptable for fibre channel arbitrated loop, according to Claim 1, wherein
said function for transmitting diagnostic frames may be set from outside the electronic device.

5. The electronic device adaptable for fibre channel arbitrated loop, according to Claim 1, wherein
said function for constantly carrying out error detection of said received frames can be set effective or ineffective from outside the electronic device.

6. A method for detecting wrong conditions in fibre channel arbitrated loops, to which a plurality of electronic devices is coupled intermediately with ports, comprising the steps of:
a first step (Fig. 2) for inserting a diagnostic frame in series of normal frames on a fibre channel arbitrated loop from one of the electronic devices;
a second step for detecting an error of said frames on the fibre channel arbitrated loop; and
a third step for transmitting a display showing that there is an error or a signal meaning that there is an error, to outside the electronic device when said error in said frames is detected.

7. A method for detecting wrong conditions in fibre channel arbitrated loops, to which a plurality of electronic devices is coupled intermediately with ports, comprising the steps of:
a first step (Fig. 2) for inserting a diagnostic frame in series of normal frames on a fibre channel arbitrated loop from one of the electronic devices;
a second step for detecting an error of said frames on the fibre channel arbitrated loop; and
a third step for recording said detected frame error to the electronic device.

8. A method for detecting wrong conditions in fibre channel arbitrated loops, to which a plurality of electronic devices is coupled intermediately with ports, comprising the steps of:
a first step (Fig. 2) for inserting a diagnostic frame in series of normal frames on a fibre channel arbitrated loop from one of the electronic devices;
a second step for detecting an error of said frames on the fibre channel arbitrated loop; and
a third step for transmitting a display showing that there is an error or a signal meaning that there is an error, to outside the electronic device when said detected frame error satisfies predetermined conditions.

9. The method for detecting wrong conditions in fibre channel arbitrated loops, according to Claim 6 or Claim 8, wherein
said display showing that there is an error in the third step is the lighting of a light emitting element, or a warning sound made by a sound emitting element, established on the electronic device.
